# EUROPEAN PATENT APPLICATION

(11) **EP 4 366 429 A1**
(43) Date of publication of application: **08.05.2024**
(21) Application number: 22833271.4
(22) Date of filing: 30.06.2022
(51) Int. Cl.: H04W 72/12, H04W 48/00, H04W 48/16, H04W 52/02, H04W 68/00

(54) **TERMINAL AND WIRELESS COMMUNICATION METHOD**

(30) Priority: 30.06.2021 JP 2021108257
(71) Applicant: DENSO CORPORATION, Kariya-city, Aichi 448-8661 (JP); TOYOTA JIDOSHA KABUSHIKI KAISHA, Toyota-shi Aichi 471-8571 (JP)
(72) Inventor: NAGANO, Tatsuki, Kariya- city, Aichi 448-8661 (JP)
(74) Representative: TBK
(86) International application number: PCT/JP2022/026193
(87) International publication number: WO 2023/277125

(57) **Abstract**

A terminal includes: a receiving unit which receives information about resources for a plurality of tracking reference signals (TRS) and information indicative of a correspondence of each of the resources for the plurality of TRS to a value of a TRS availability indication field and receives downlink control information including the value of the TRS availability indication field through a physical downlink control channel; and a control unit which identifies the each of the resources for the plurality of TRS based on the value of the field for the TRS availability indication.

## Description

### Cross-Reference to Related Application

This application is based on and claims priority to Japanese Patent Application No. 2021-108257, filed June 30, 2021, the entire contents of which are incorporated herein by reference.

### Technical Field

This disclosure relates to a terminal, and a wireless communication method.

### Background Art

In the 3rd Generation Partnership Project (3GPP) as an international standards organization, New Radio (NR) Release 15 as the 5th generation (5G) RAT (Radio Access Technology) is specified as a successor to Long Term Evolution (LTE) as the 3.9th generation RAT and LTE-Advanced as the 4th generation RAT (for example, Non-Patent Document 1). LTE and/or LTE-Advanced are also called Evolved Universal Terrestrial Radio Access (E-UTRA).

### Citation List

### Non-Patent Document

Non-Patent Document 1: 3GPP TS 38.300 V15.2.0 (2018-06)

### Summary of Invention

### Technical Problem

Currently, in the 3GPP, it is considered to perform synchronization in a time domain and/or a frequency domain (hereinafter referred to as "time-frequency synchronization") by use of a reference signal for tracking (hereinafter referred to as "Tracking Reference Signal (TRS)"). For example, it is expected to reduce electrical power to be consumed by a terminal in an idle state or in an inactive state such that the terminal performs time-frequency synchronization before a Paging Occasion (PO) by use of the TRS instead of a Synchronization Signal.

Further, it is also considered that whether or not TRS is actually transmitted in a resource and/or a period configured for TRS is made controllable by informing a terminal of indication information (hereinafter referred to as "TRS availability indication") about availability of TRS in the resource and/or the period, and/or by providing validity time for the indication information.

This disclosure is accomplished in view of such circumstances, and one object of this disclosure is to provide a terminal, and a wireless communication method each of which is able to control an operation related to TRS appropriately.

### Solution to Problem

A terminal according to one aspect of this disclosure includes: a receiving unit which receives information about resources for a plurality of tracking reference signals (TRS) and information indicative of a correspondence of each of the resources for the plurality of TRS to a value of a TRS availability indication field and receives downlink control information including the value of the TRS availability indication field through a physical downlink control channel; and a control unit which identifies the each of the resources for the plurality of TRS based on the value of the field for the TRS availability indication.

One object of one aspect of this disclosure is to provide a terminal and a wireless communication method each of which is able to control an operation related to TRS appropriately.

### Brief Description of Drawings

Fig. 1 is a diagram illustrating an example of the overview of a wireless communication system according to the present embodiment.
Fig. 2 is a diagram illustrating an example of acquisition of an SI message according to the present embodiment.
Figs. 3A and 3B are diagrams each illustrating an example of a TRS availability indication and validity time according to the present embodiment.
Fig. 4 is a diagram illustrating another example of the TRS availability indication and the validity time according to the present embodiment.
Fig. 5 is a diagram illustrating an example of a TRS-related operation at the time of cell reselection according to the present embodiment.
Fig.6 is a diagram illustrating another example of the TRS-related operation at the time of cell reselection according to the present embodiment.
Figs. 7A and 7B are diagrams each illustrating an example of an operation during running of a validity timer according to the present embodiment.
Fig. 8 is a diagram illustrating an example of an SI update procedure according to the present embodiment.
Fig. 9 is a diagram illustrating an example of a control operation on the validity time of the TRS availability indication according to the present embodiment.
Fig. 10 is a diagram illustrating another example of the control operation on the validity time of the TRS availability indication according to the present embodiment.
Fig. 11 is a diagram illustrating an example of the hardware configuration of each equipment in the wireless communication system according to the present embodiment.
Fig. 12 is a diagram illustrating an example of the functional block configuration of a terminal according to the present embodiment.
Fig. 13 is a diagram illustrating an example of the functional block configuration of a base station according to the present embodiment.

### Description of Embodiments

With reference to the attached drawings, the following describes the present embodiment. In order to facilitate understanding of the description, identical constituents in the drawings have the same reference sign as far as possible, and redundant descriptions are omitted.

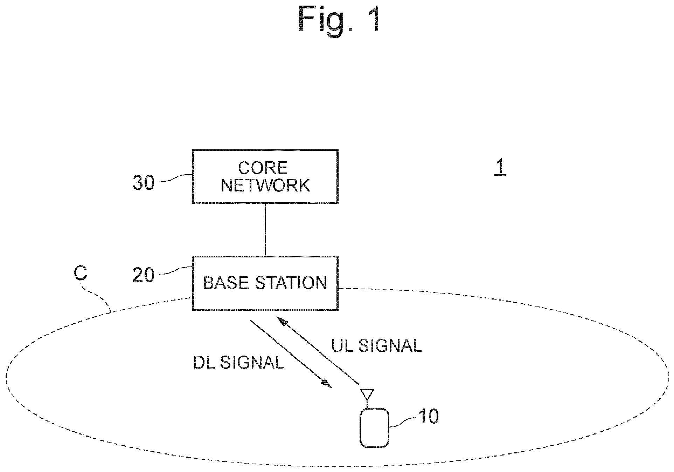

Fig. 1 is a diagram illustrating an example of the overview of a wireless communication system according to the present embodiment. As illustrated in Fig. 1, a wireless communication system 1 may include a terminal 10, a base station 20, and a core network 30. Note that the number of terminals 10 and base stations 20 illustrated in Fig. 1 is just an illustrative example, and the number is not limited to that illustrated.

As Radio Access Technology (RAT) of the wireless communication system 1, for example, NR is assumed, but it is not limited to NR, and various RATs such as the 6th generation (6G) RAT or later can be utilized.

The terminal 10 is a given terminal or equipment such as a smartphone, a personal computer, an in-vehicle terminal, an in-vehicle device, a stationary device, or a telematics control unit (TCU), for example. The terminal 10 may also be called User Equipment (UE), a Mobile Station (MS), a terminal (User Terminal), a radio apparatus, a subscriber terminal, an access terminal, or the like. The terminal 10 may be of a mobile type or a fixed type. The terminal 10 is configured communicably using NR as RAT, for example.

The base station 20 forms one or more cells C to communicate with the terminal 10 using each of the cells. The cell C may also be mutually rephrased as a serving cell, a carrier, a component carrier (CC), and the like. For example, the base station 20 may configure one primary cell and one or more secondary cells for the terminal 10 and communicate with the terminal 10 (also called carrier aggregation). That is, the one or more cells C include at least a primary cell and may include a secondary cell.

Further, one or more Bandwidth Parts (BWPs) may be configured on one carrier C. Here, BWPs mainly used when the terminal 10 initially accesses a cell are also called an initial downlink BWP (Initial DL BWP) and an initial uplink BWP (Initial UL BWP). For example, the base station 20 may broadcast information used to configure respective frequency locations, respective bandwidths, respective subcarrier spacings, and/or respective cyclic prefixes to the initial downlink BWP and the initial uplink BWP in such a form that the information is included in system information.

The base station 20 may also be called a gNodeB (gNB), an en-gNB, a Next Generation-Radio Access Network (NG-RAN) node, a low-power node, a Central Unit (CU), a Distributed Unit (DU), a gNB-DU, a Remote Radio Head (RRH), an Integrated Access and Backhaul/Backhauling (IAB) node, or the like. The base station 20 is not limited to one node and may be constituted by a plurality of nodes (for example, a combination of a lower node such as a DU and an upper node such as a CU).

The core network 30 is, for example, an NR-compatible core network (5G Core Network: 5GC), but the core network 30 is not limited thereto. A device on the core network 30 (hereinafter also be referred to as a "core network device") performs mobility management such as paging and location registration of the terminal 10. The core network device may be connected to the base station 20 through a given interface (for example, S1 or NG interface).

The core network device may include, for example, at least one of Access and Mobility Management Function (AMF) for managing C-plane information (e.g., information related to access, mobility management, and the like), and User Plane Function (UPF) for transmission control of U-plane information (e.g., user data).

In the wireless communication system 1, the terminal 10 receives a downlink (DL) signal from the base station 20 and/or transmits an uplink signal (UL). One or more cells C are configured for the terminal 10, and at least one of the cells thus configured is activated. The maximum bandwidth of each cell is, for example, 20 MHz, 400 MHz, or the like.

Further, the terminal 10 performs cell search based on a synchronization signal (for example, Primary Synchronization Signal (PSS) and/or Secondary Synchronization Signal (SSS)) from the base station 20. The cell search is a procedure of the terminal 10 acquiring synchronization of time and frequency in a cell and detecting an identifier of the cell (e.g., a physical layer cell ID).

A block including at least one of the synchronization signal, a broadcast channel (e.g., Physical Broadcast Channel: PBCH), and a Demodulation Reference Signal (DMRS) for the broadcast channel is also called a Synchronization Signal Block (SSB), a SS/PBCH block, or the like. One or more SSBs may constitute one SS burst, and one or more SS bursts may constitute one SS burst set. An SS burst set may be transmitted at a given cycle (for example, 20 ms (two radio frames)). In a case of multi-beam operation, SSBs of different indices may correspond to different beams and may be transmitted by changing a beam direction sequentially by beam sweeping.

The terminal 10 determines a search space and/or a Control Resource Set (CORESET) based on a parameter (hereinafter referred to as an "RRC parameter") included in a Radio Resource Control (RRC) message and performs monitoring of Downlink Control Information (DCI) transferred through a downlink control channel (for example, Physical Downlink Control Channel (PDCCH)) in the search space associated with the CORESET. Note that the RRC message may include, for example, an RRC setup message, an RRC reconfiguration message, an RRC resume message, system information, and so on.

The monitoring of DCI indicates that the terminal 10 performs blind decoding on a PDCCH candidate in a search space set by a predicted DCI format. A bit number (also referred to as a size, a bit width, or the like) of the DCI format is determined or derived in advance in accordance with a bit number of a field included in the DCI format. The terminal 10 detects DCI for the terminal 10 based on the bit number of a DCI format, and a specific Radio Network Temporary Identifier (RNTI) used for scrambling (hereinafter referred to as "CRC scrambling") of a Cyclic Redundancy Check (CRC) bit (also called a CRC parity bit) of the DCI format. The monitoring of DCI is also called PDCCH monitoring, monitor, or the like. Further, a period for performing the monitoring of DCI is also called a PDCCH monitoring occasion.

The search space set is a set of one or more search spaces and may include a search space set (hereinafter referred to as a "common search space (CSS) set") used in common by one or more terminals 10, and a terminal-specific search space set (a UE-specific search space (USS) set). A search space set used for PDCCH monitoring by the terminal 10 may be configured in the terminal 10 by use of a higher layer parameter (for example, RRC Information Element (IE) "SearchSpace," RRC IE "pagingSearchSpace," RRC IE "searchSpaceSIB1," RRC IE "searchSpaceOtherSystemInformation," or the like). The terminal 10 performs PDCCH monitoring using the search space set to detect DCI subjected to CRC scrambling by specific RNTI (for example, Cell (C)-RNTI, Paging (P)-RNTI, or the like) and controls reception of PDSCH scheduled by use of the DCI and/or transmission of an uplink shared channel (for example, Physical Uplink Shared Channel (PUSCH)).

### (System Information)

System information broadcast by a cell C may include Master Information Block (MIB) and one or more System Information Blocks (SIB). MIB is broadcast through a Broadcast Channel (BCH). MIB and SIB1 are also called Minimum System Information, and SIB1 is also called Remaining Minimum System Information (RMSI). SIB1 is broadcast through a Downlink Shared Channel (DL-SCH). SIBx (x is a given text such as 2, 3, ..., and the like) other than SIB1 is also called Other System Information (OSI). SIB1 is cell-specific, and SIBx other than SIB1 is cell-specific or specific to an area including one or more cells. The area is also called a system information area or the like.

One or more SIBx are mapped in a System Information (SI) message, and the SI message is broadcast through DL-SCH. Each SI message may be associated with a time domain window (hereinafter referred to as an "SI window") generated periodically and transmitted in the SI window. Note that BCH and DL-SCH may be mutually rephrased as PBCH and Physical Downlink Shared Channel (PDSCH), respectively.

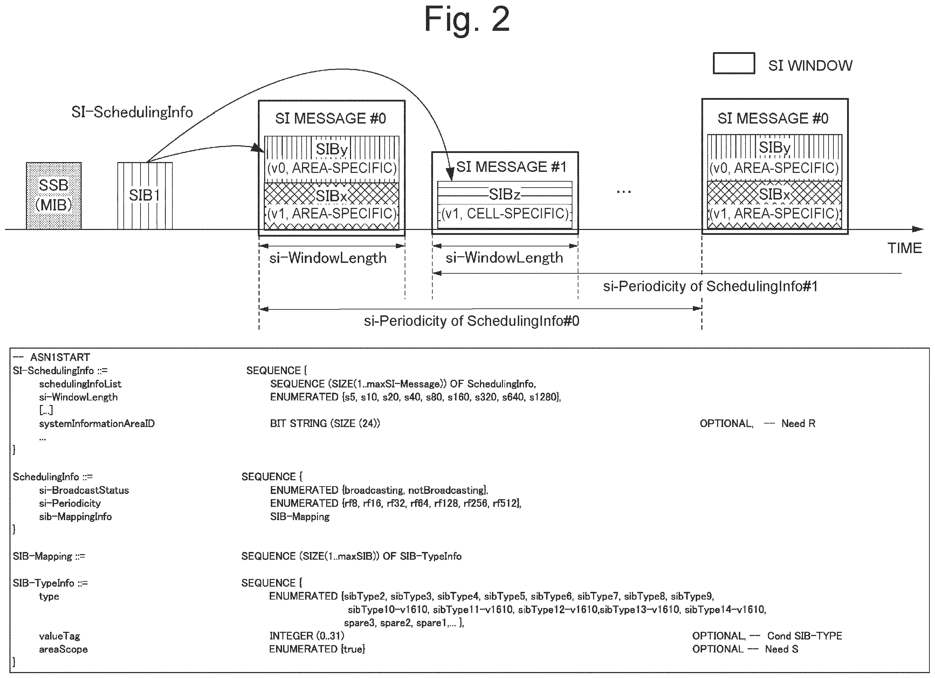

Fig. 2 is a diagram illustrating an example of acquisition of an SI message according to the present embodiment. In Fig. 2, SIBx and SIBy are mapped on SI message #0, and SIBz is mapped on SI message #1 as an example. Here, x, y, and z are given texts such as 2, 3, ..., and the like and should be identifiers indicative of a type of SIB (hereinafter referred to as "SIB type"). SI messages #0 and #1 may be broadcast at a given cycle or may be broadcast on demand in response to a request from the terminal 10. Further, SI messages #0 may be identical in a modification period. Note that Fig. 2 is just an example, and the number of SI messages, the number of SIBs to be mapped on each SI message, whether SIBx, SIBy, and SIBz are area-specific or cell-specific, and the like are not limited to those illustrated herein.

As illustrated in Fig. 2, for example, the terminal 10 detects SSB and acquires MIB broadcast through PBCH. The terminal 10 detects DCI subjected to CRC scrambling by specific RNTI (for example, System Information (SI)-RNTI) by monitoring a search space set (for example, a Type0-PDCCH CSS set) configured for SIB1 and receives SIB1 through PDSCH scheduled by the DCI. The search space set for SIB1 may be configured based on a parameter in MIB but is not limited to this.

Further, SIB1 may include at least one of the following information.
- Information about each SI message (for example, each "schedulinginfo" in RRC IE "schedulingInfoList").
- Identification information on an area to which area-specific SIB belongs (for example, RRC IE "systemlnformationAreaID").
- Information about the length of an SI window (for example, RRC IE "si-WindowLength"). Here, the length is expressed as the number of slots, for example.
- Information about a cycle of each SI message (for example, "si-Periodicity" in RRC IE "schedulingInfo"). Here, the cycle is expressed as the number of radio frames, for example.
- Information about each SIB mapped on each SI message (for example, each "SIB-Typelnfo" in "SIB-Mapping" in RRC IE "schedulinginfo"). Here, the information about each SIB may include, for example, at least one of information about an SIB type (for example, RRC IE "type"), information about a version of each SIB or the number of times of modification (hereinafter referred to as "version information," for example, RRC IE "valueTag"), and information indicating that each SIB is area-specific (for example, RRC IE "areaScope"). Note that, in a case where SIB1 does not include information indicating that each SIB is area-specific, it may indicate that each SIB is cell-specific.

The terminal 10 detects DCI subjected to CRC scrambling by specific RNTI (for example, SI-RNTI) by monitoring a search space set (for example, a Type0A-PDCCH CSS set) configured for OSI, receives SI messages #0 and #1 through PDSCH scheduled by the DCI, and performs an operation based on OSI (herein, SIBx, SIBy, and SIBz) included in SI messages #0 and #1.

For example, in Fig. 2, SIBx and SIBy included in SI message #0 are area-specific, and SIBz included in SI message #1 is cell-specific. Further, version information (for example, RRC IE "valueTag") of SIB1 indicates that SIBx and SIBz are modified once to version v1, and SIBy is not modified and remains version v0. For example, the terminal 10 may determine, based on the version indicated by version information and the version of SIBx stored in the terminal 10 itself, whether the stored SIBx is valid or not. For example, in a case where "v1" indicated by valueTag in SIB1 is the same as the version of SIBz stored in the terminal 10, the terminal 10 may not receive SI message #1 including SIBz again. In the meantime, in a case where version "v1" indicated by valueTag in SIB1 is not the same as the version of SIBx stored in the terminal 10, the terminal 10 may receive SI message #0 including SIBx again. Thus, valuetag of SIBx, SIBy, and SIBz may be counted up by 1 every time contents are changed.

### (Paging)

In paging, a message (hereinafter referred to as a "paging message") for setup of a network-initiated connection is transmitted to the terminal 10 in a case where the terminal 10 is in an idle state or in an inactive state. Further, in paging, for example, a change notification of system information and/or a short message used for public warning (for example, Earthquake and Tsunami Warning System (ETWS), Commercial Mobile Alert Service (CMAS), or the like) is transmitted to the terminal 10. The short message may be transmitted to the terminal 10 regardless of the state of the terminal 10 (for example, the idle state, the inactive state, a connected state, or the like).

Here, the idle state is a state where a connection in an RRC layer (hereinafter referred to as an "RCC connection") between the terminal 10 and the base station 20 is not established and is also called RRC_IDLE, an idle mode, an RRC idle mode, or the like. The terminal 10 in the idle state receives system information broadcast in a camp-on cell. When the RRC connection is established, the terminal 10 in the idle state transitions to the connected state.

Further, the inactive state is a state where the RRC connection is established but is suspended and is also called an RRC_INACTIVE state, an inactive mode, an RRC inactive mode, or the like. The terminal 10 in the inactive state receives system information broadcast in a camp-on cell. When the RRC connection is resumed, the terminal 10 in the inactive state transitions to the connected state, and when the RRC connection is released, the terminal 10 transitions to the idle state.

The connected state is a state where the RRC connection is established and is also called an RRC_CONNECTED state, a connected mode, an RRC connected mode, or the like. When the RRC connection is released, the terminal 10 in the connected state transitions to the idle state, and when the RRC connection is suspended, the terminal 10 transitions to the inactive state.

The terminal 10 in the idle state or the inactive state receives a paging message in a paging occasion (PO) that is a period of a given cycle by Discontinuous Reception (DRX). The PO is associated with a paging frame (PF) of the given cycle. The PF may be constituted, for example, by a radio frame identified by a specific number (for example, a system frame number (SFN)). The PO may be constituted by a subframe, a slot, or a symbol of a given cycle, for example.

Here, a radio frame is constituted by 10 subframes, and one subframe may be 1 ms. A slot is a time unit based on numerology (for example, a subcarrier spacing (SCS)), and in a case of SCS = 15 kHz, one slot may be equal to one subframe, for example. One slot may include a given number of symbols (for example, 14 symbols).

For example, in the terminal 10, a PF may be configured at a cycle determined based on a DRX cycle (hereinafter referred to as a "paging cycle"), and one PO may be configured to each PF. That is, a PO may be configured in the terminal 10 at a paging cycle. The PO may include one or more PDCCH monitoring occasions. The following description deals with PO as a paging period but is not limited to this, and it is needless to say that PF or other terms corresponding to the paging period may be used.

The terminal 10 may monitor a search space set (for example, a Type2-PDCCH CSS set) configured by a higher parameter (for example, RRC IE "pagingSearchSpace") and detect DCI (hereinafter also referred to as "paging DCI") subjected to CRC scrambling by specific RNTI (for example, paging (P)-RNTI). The terminal 10 receives a paging message through PDSCH scheduled by use of paging DCI. Here, information indicative of the specific RNTI (for example, P-RNTI) may be configured in the terminal 10 by higher layer signaling.

Further, the terminal 10 may receive a short message transmitted by paging DCI. Thus, paging DCI is used for scheduling of PDSCH used for transmission of a paging message and/or transmission of a short message.

### (TRS)

It is considered that the terminal 10 performs time-frequency synchronization by use of TRS. For example, the terminal 10 in the idle state or the inactive state enters a sleep state in which electric power to be consumed is reduced during a PO by DRX in principle, but the terminal 10 enters a wake-up state for time-frequency synchronization during a given period before its subsequent PO. More specifically, it is assumed that the terminal 10 enters a deep sleep state in the given period after the previous PO, and after the given period, the terminal 10 enters a micro-sleep state until the subsequent PO.

Here, the deep sleep state is a state where electric power to be consumed is further reduced as compared with the micro-sleep state. For example, in a case where time-frequency synchronization is performed by use of TRS placed at a time location closer to the subsequent PO than an SS burst, the period of the deep sleep state of the terminal 10 between POs can be made longer than a case where time-frequency synchronization is performed by use of the SS burst. Because of this, reduction of electric power to be consumed by the terminal 10 by time-frequency synchronization using TRS is expected.

Here, TRS is constituted by, for example, a Channel State Information-Reference Signal (CSI-RS) but is not limited to this. TRS may be rephrased as CSI-RS, non zero power-CSI-RS (NZP-CSI-RS), TRS/CSI-RS, a reference signal, or the like.

The purpose of TRS should be at least one of the time-frequency synchronization, tracking, path delay spread, estimate of doppler spread, and loop convergence, for example. Tracking means tracking and/or compensating time and/or frequency variations of a local oscillator of the terminal 10. TRS may be any reference signal used for the above purpose. Further, in a case where TRS is configured in the terminal 10, the terminal 10 can perform time-frequency synchronization without referring to an SS burst.

A resource for such TRS (hereinafter referred to as "TRS resource") may be constituted by, for example, a set (hereinafter referred to as "NZP-CSI-RS resource set") of one or more resources (hereinafter referred to as "NZP-CSI-RS resources") for NZP-CSI-RS. The TRS resource may be constituted by a given number of symbols and a given number of subcarriers in a given number of slots of a given cycle (hereinafter referred to as "TRS cycle", for example, a cycle of 10, 20, 40, or 80 ms). The period of the given cycle (for example, the given number of slots) including the TRS resource is also called a TRS occasion, a TRS/CSI-RS occasion, or the like.

The terminal 10 receives information (hereinafter referred to as "TRS resource/occasion information") about a TRS resource and/or a TRS occasion (hereinafter referred to as "TRS resource/occasion"). The terminal 10 may configure the TRS resource/occasion based on TRS resource/occasion information from the base station 20.

Note that TRS resource/occasion information for the terminal 10 in the idle state or the inactive state may be at least part of TRS resource/occasion information for the terminal 10 in the connected state. The TRS resource/occasion information for the terminal 10 in the connected state (for example, RRC IE "NZP-CSI-RS ResourceSet," RRC IE "CSI-ResourceConfig," or the like) may be included in an RRC message (for example, RRCSetup message for establishing an RRC connection or an RRCReconfiguration message for reconfiguring an RRC connection).

In the meantime, the TRS resource/occasion information for the terminal 10 in the idle state or the inactive state may be included in system information (for example, SIB1 or SIBx) and/or an RRC message (for example, an RRCRelease message used for releasing or suspending an RRC connection, or the like). For example, the TRS resource/occasion information for the terminal 10 in the idle state or the inactive state may include information about electric power of TRS (for example, powerControlOffsetSS indicative of power offset of TRS to SSS), information (scramblingID) about a scrambling ID of TRS, information about a time domain resource where TRS is mapped (for example, firstOFDMSymbolInTimeDomain indicative of a first symbol for TRS), and information about a frequency domain resource where TRS is mapped (for example, startingRB indicative of a TRS start resource block, nrofRBs indicative of a TRS resource block number, or the like).

Further, the TRS resource/occasion information for the terminal 10 in the idle state or the inactive state includes information about Quasi Co-Location (QCL), and an index for SSB may be configured. That is, when an index for SSB is configured as TRS resource/occasion information, the terminal 10 may identify a Quasi Co-Location relationship between TRS transmitted in a corresponding TRS resource/occasion and the SSB. Here, Quasi Co-Location may indicate that large-scale properties of a given signal (for example, TRS) can be assumed to be fully or partially identical with large-scale properties of another signal (for example, SSB). For example, that two antenna ports are quasi co-located may indicate that a signal (or a channel) transmitted in a given antenna port can be estimated from a signal (or a channel) transmitted in another antenna port. Here, for example, the large-scale properties may include doppler spread, doppler shift, delay spread, average gain, and/or average delay.

Here, the index for SSB, configured as information about Quasi Co-Location, may be an index of SSB associated with SIB1 (also referred to as Cell-Defining SSB). That is, in a case where information about Quasi Co-Location is configured for the terminal 10 as TRS resource/occasion information for the terminal 10 in the idle state or the inactive state, the index for SSB associated with SIB1 may be configured. Based on the index for SSB associated with SIB1, configured by the base station 20, the terminal 10 may consider that TRS transmitted in a corresponding TRS resource/occasion and the SSB are quasi co-located (they have a Quasi Co-Location relationship). Here, SIB1 may be also called RMSI (Remaining Minimum System Information).

Further, at least one parameter used to configure the TRS resource/occasion for the terminal 10 in the idle state or the inactive state may be determined in specifications in advance. The parameter may be, for example, at least one of information about BWP (for example, bwp-id indicative of BWP ID), information about a TRS resource in a time domain (for example, resourceType indicative of being aperiodic, semi-persistent, or periodic), information about repetition (for example, repetition indicative of ON or OFF of repetition), aperiodicTriggeringOffset indicative of a time offset between an aperiodic TRS trigger and a TRS resource, trs-Info indicating that all NZP CSI-RS resources in a CSI-RS resource set have the same antenna port, information about electric power of TRS (for example, powerControlOffset indicative of a power offset of PDSCH to NZP-CSI-RS), information about the number of antenna ports for TRS (for example, nrofPorts indicative of the number of ports), information about a time domain resource (for example, firstOFDMSYmbolInTimeDomain2 indicative of a time domain allocation in a resource block), cdm-Type indicative of the type of Code Division Multiplexing (CDM) of TRS, and information about the density of a TRS resource (for example, density). Note that, as described above, TRS herein may be rephrased as NZP CSI-RS or the like.

Further, TRS resource/occasion information may include a parameter commonly used or parameters individually used to configure a plurality of TRS resources/occasions. Respective indices may be given to the plurality of TRS resources/occasions. For example, respective indices may be given to respective parameters (for example, parameter sets) used individually to configure the plurality of TRS resources/occasions. That is, no index may be given to the parameter used commonly to configure the plurality of TRS resources/occasions. Thus, the TRS resource/occasion may be controlled based on a higher layer parameter (for example, an RRC parameter and/or MAC CE, or the like) and/or a physical layer parameter (for example, a DCI format, or the like).

It is considered that indication information (hereinafter referred to as "TRS availability indication") about availability of TRS in a TRS resource/occasion is signaled by the base station 20 to the terminal 10. Note that the availability of TRS can be mutually rephrased as transmittability of TRS in a TRS resource/occasion or the like. Further, in the following description, the expression "TRS is actually transmitted or not transmitted (from the base station 20)" can be rephrased as the expression "TRS is available or not available (for the terminal 10)."

The TRS availability indication is constituted by a given number of bits such that a first value (for example, "1") in the bits may indicate that TRS is available (that is, TRS is actually transmitted from the base station 20) and a second value (for example, "0") in the bits may indicate that TRS is not available (that is, TRS is not actually transmitted from the base station 20). Further, the given number of bits constituting the TRS availability indication may indicate whether or not TRS is available in a specific TRS resource/occasion (that is, whether or not TRS is actually transmitted from the base station 20). For example, in a case where a TRS resource is constituted by an NZP-CSI-RS resource set including NZP-CSI-RS resources #0 to #3, a first bit value (for example, "000") may indicate that TRS is not transmitted in the whole NZP-CSI-RS resource set, a second bit value (for example, "001" to "110," or the like) may indicate that TRS is transmitted in an NZP-CSI-RS resource that is part of the NZP-CSI-RS resource set and indicated by the second bit value, and a third bit value (for example, "111 ") may indicate that TRS is transmitted in the whole NZP-CSI-RS resource set.

Further, for example, the base station 20 may configure the correspondence between a value set as the TRS availability indication (for example, each of "000," "001" to "110," and the like" and/or "111,") and the NZP-CSI-RS resource set, by use of higher layer signaling such as an RRC message or the like. Here, #0 to #3 in NZP-CSI-RS resources #0 to #3 may correspond to indices given to TRS resources/occasions. For example, as described above, each of the plurality of TRS resources/occasions may be identified such that respective indices are given to respective parameters (for example, parameter sets) used individually to configure the plurality of TRS resources/occasions, and an index is indicated corresponding to a TRS availability indication (or a bit value). That is, the terminal 10 may identify a TRS resource/occasion based on a parameter used commonly to configure the plurality of TRS resources/occasions and a parameter of a TRS resource/occasion corresponding to an index indicated by the TRS availability indication (or the bit value). Further, the terminal 10 may determine TRS availability in the identified TRS resource/occasion based on the TRS availability indication (or the bit value).

Alternatively, the TRS availability may indicate that TRS is available (that is, TRS is actually transmitted from the base station 20). For example, only in a case where TRS is actually transmitted from the base station 20 in a TRS resource/occasion, the terminal 10 may be informed of the TRS availability indication (or the TRS availability indication is configured to true), and in a case where the TRS is not actually transmitted, the terminal 10 may not be informed of the TRS availability indication. Reversely to this, the terminal 10 may be informed of the TRS availability indication only in a case where the TRS is not actually transmitted.

For such signaling of the TRS availability indication, physical layer (L1) based signaling (hereinafter referred to as "L1 signaling") or RRC layer signaling (hereinafter referred to as "RRC signaling") may be used.

In a case where L1 signaling is used, the TRS availability indication may be a value of a given field of DCI or may be a specific signal (for example, SSB, TRS, or the like) or a specific sequence of the specific signal. DCI including the TRS availability indication may be DCI (also called "paging DCI") used for scheduling of PDSCH for transmitting a paging message or DCI (also called "PEI DCI") including a field used for paging early indication (PEI). For example, paging DCI and/or PEI DCI may be subjected to CRC scrambling by specific RNTI (for example, P-RNTI) configured by use of higher layer signaling such as a RRC message.

PEI is indication information about a paging target in a PO. The terminal 10 determines whether or not the terminal 10 or a group (or a subgroup) to which the terminal 10 belongs is targeted for paging in a PO, based on PEI (or based on whether the PEI is detected or not). In a PO untargeted for paging, the terminal 10 skips PDCCH monitoring, and/or reception and/or decoding of a paging message, so that the terminal 10 can reduce electric power to be consumed. Note that PEI is not limited to a value of a given field of DCI and may be a specific signal (for example, SSB or TRS) or a specific sequence of the specific signal. The specific signal may be used as the TRS availability indication.

In a case where RRC signaling is used, the TRS availability indication may be a parameter or a value of IE included in system information (for example, SIB1, SIBx other than SIB1, or the like) or an RRC message (for example, an RRCRelease message used for release of an RRC connection, or the like).

A duration (hereinafter referred to as "validity time") during which the TRS availability indication is considered valid may be determined in specifications in advance. Alternatively, information about the validity time (hereinafter referred to as "validity time information") may be signaled by the base station 20 to the terminal 10. The validity time information may be included in, for example, system information, an RRC message, or DCI (for example, the aforementioned paging DCI or PEI DCI). The validity time may be indicated by the number of given time units (for example, radio frames, slots, subframes, symbols, or the like), may be indicated by time (for example, ms or the like), or may be indicated by the number of paging cycles, POs, or DRX cycles. In a case where the terminal 10 receives a TRS availability indication in validity time, the terminal 10 may not acquire other TRS availability indications again in the validity time.

The validity time may be controlled by use of a timer (hereinafter referred to as a "validity timer"). The validity timer may be started, for example, based on detection of a TRS availability indication, may be started based on detection of system information, paging DCI, or PEI DCI, or may be started based on SSB, SS burst, or PO. When a duration determined in specifications in advance or a duration indicated by validity time information passes, the validity timer may expire. In a case where the terminal 10 does not receive a TRS availability indication before the validity timer expires, the terminal 10 may assume that TRS is not available in a corresponding TRS resource/occasion.

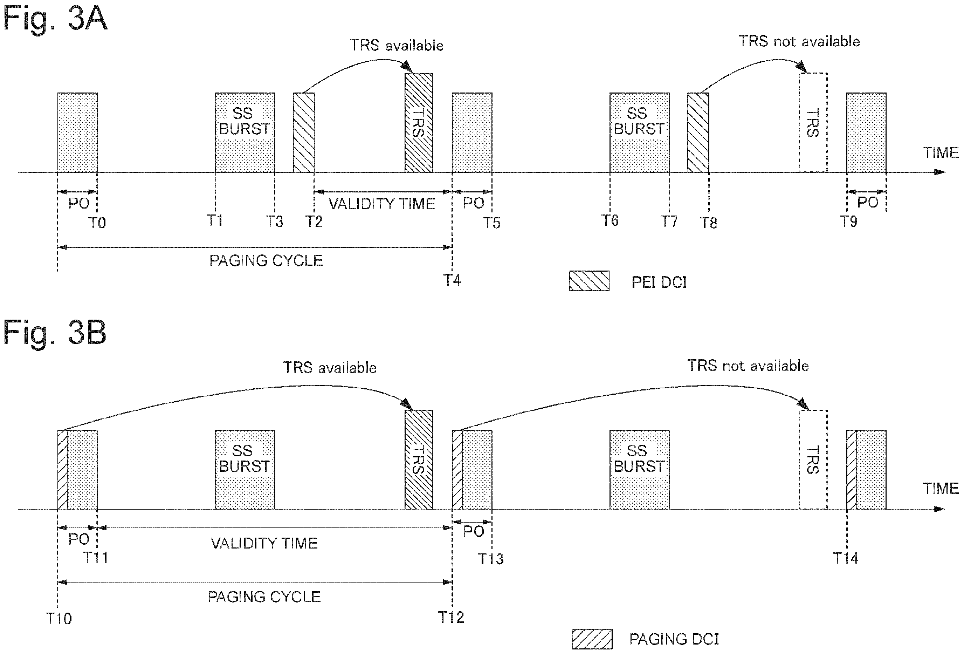

Figs. 3A and 3B are diagrams each illustrating an example of a TRS availability indication and validity time according to the present embodiment. For example, in Figs. 3A and 3B, the terminal 10 is in the deep sleep state from end timing T0 of a previous PO until start timing T1 of reception of an SS burst, and the terminal 10 is in the micro-sleep state from end timing T3 of the SS burst until start timing T4 of a subsequent PO, except reception periods of a TRS availability indication and TRS. The period from timing T5 to timing T9 is also the same as the period from timing T0 to timing T4. Note that Figs. 3A and 3B are just examples, and a period during which the terminal 10 enters the deep sleep state and/or the micro-sleep state is changeable appropriately.

For example, in Fig. 3A, a TRS availability indication is included in PEI DCI. The terminal 10 detects the PEI DCI by monitoring in a PDCCH monitoring occasion configured for PEI. The terminal 10 determines whether or not TRS is transmitted before the subsequent PO, based on the TRS availability indication in the PEI DCI. For example, the terminal 10 determines that TRS is transmitted in a TRS resource/occasion before the subsequent PO, based on PEI DCI detected at timing T2. In the meantime, the terminal 10 determines that TRS is not transmitted in a TRS resource/occasion before the subsequent PO, based on PEI DCI detected at timing T8.

As illustrated in Fig. 3A, the validity time of a TRS availability indication indicating that TRS is available may be a period from the timing of detection of PEI DCI including the TRS availability indication to the start timing of the subsequent PO. Note that, in Fig. 3A, a timer may start at timing T2 of detection of PEI DCI, and the timer may be stop or expire at start timing T4 of the subsequent PO.

Further, Fig. 3B is different from Fig. 3A in that paging DCI includes a TRS availability indication. In Fig. 3B, the terminal 10 may operate by reading PEI DCI in Fig. 3 A as paging DCI. As illustrated in Fig. 3B, the validity time of a TRS availability indication may be a period from the end timing of a PO in which paging DCI including the TRS availability indication is detected to the start timing of its subsequent PO. With the TRS availability indication using paging DCI, it is possible to flexibly change whether or not TRS is transmitted in a configured TRS resource, even in a case where PEI is not transmitted.

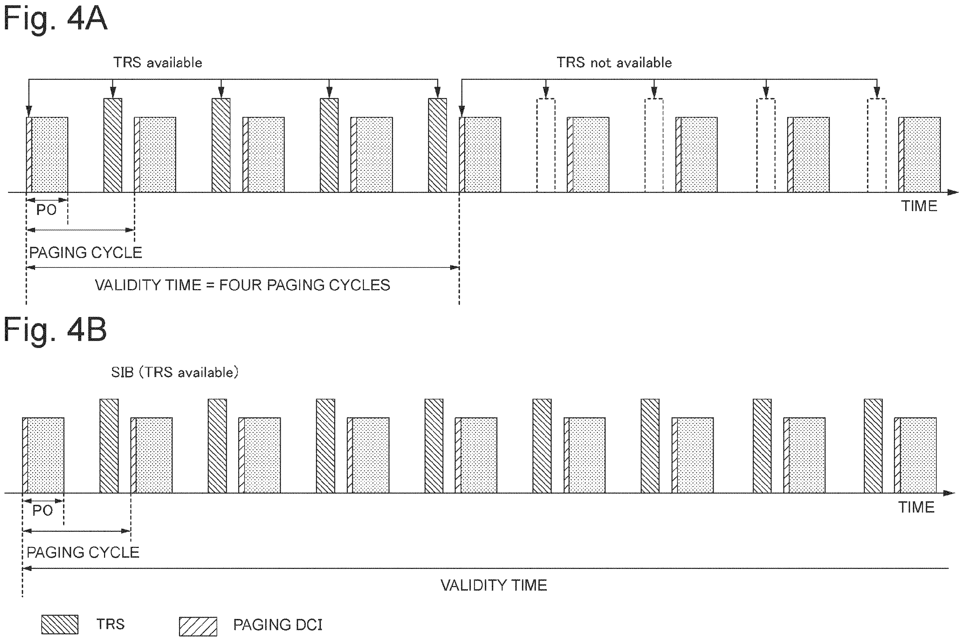

Figs. 4A and 4B are diagrams each illustrating another example of the TRS availability indication and the validity time according to the present embodiment. Figs. 4A and 4B are different from Figs. 3A and 3B in that the validity time of a TRS availability indication is over one or more POs.

With reference to Fig. 4A, the following describes mainly differences from Fig. 3B in terms of the TRS availability indication included in paging DCI. Note that the validity time over one or more POs is also applicable to the TRS availability indication using PEI as described in Fig. 3A. For example, in Fig. 4A, the validity time of the TRS availability indication may be four paging cycles. For example, as illustrated in Fig. 4A, in a case where paging DCI including a TRS availability indication is detected in a given PO, the TRS availability indication may indicate whether or not TRS is transmitted in a TRS resource configured over four paging cycles from the PO.

Fig. 4B illustrates an example of a TRS availability indication in system information (for example, SIB1 or SIBx). The terminal 10 may determine whether or not TRS is transmitted in a TRS resource configured before each PO, based on the TRS availability indication in the system information. The TRS availability indication using system information is suitable for a case where the validity time is relatively long.

Note that, in Figs. 3 and 4, a PDCCH monitoring occasion for DCI used for the TRS availability indication may be determined based on at least one time location of an SS burst, an SS burst set, and a PO. For example, the PDCCH monitoring occasion may be determined based on the time location and a time offset to the time location. The time offset may be based on a subcarrier spacing of SSB or Bandwidth Part (BWP).

### (TRS-related Operation)

In a case where whether or not TRS is actually transmitted in a TRS resource/period is controllable by informing the terminal 10 of a TRS availability indication and/or by providing validity time for the TRS availability indication, it is desired to control an operation related to TRS (hereinafter referred to as a "TRS-related operation") appropriately. The following describes TRS-related operations in the following cases: (1) a case where reselection of a cell (hereinafter referred to as "cell reselection") that the terminal 10 camps on is performed; (2) a case where a validity timer is running; and (3) a case where availability of TRS is indicated by use of system information.

Note that the following deals with, as an example of system information, SIBx (x is an identifier indicative of an SIB type such as 2, 3, 4) other than SIB1, but the system information in the present embodiment is not limited to SIBx. Further, in the following description, the terminal 10 is in the idle state or the inactive state, but this shall not preclude the application to the terminal 10 in the connected state.

### (1) TRS-related Operation in Cell Reselection

The following describes a TRS-related operation of the terminal 10 at the time of cell reselection. The terminal 10 receives SIBx at the time of cell selection or cell reselection. It is assumed that the SIBx is either area-specific or cell-specific. In a case where cell reselection is performed among cells in the same area, the terminal 10 may not receive area-specific SIBx again. It is also assumed that SIBx used to configure a TRS resource/occasion is either area-specific or cell-specific.

In view of this, in a case where the terminal 10 performs reselection of a camp-on cell, the terminal 10 controls a validity timer related to the validity time of a TRS availability indication indicating that TRS is available in a TRS resource/occasion, based on whether SIBx used to configure the TRS resource/occasion is area-specific or cell-specific.

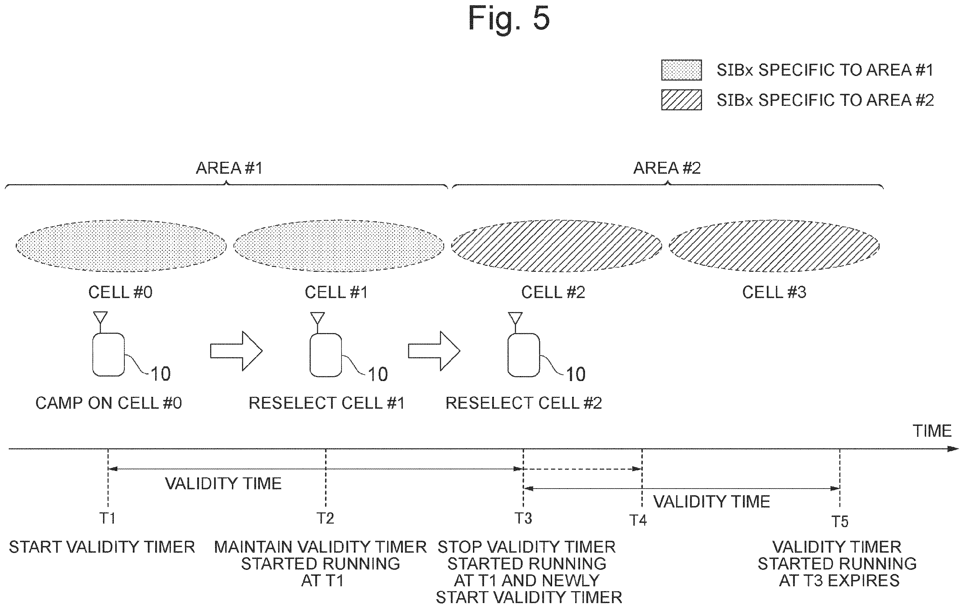

Fig. 5 is a diagram illustrating an example of a TRS-related operation at the time of cell reselection according to the present embodiment. For example, in Fig. 5, cells #0 and #1 are included in an area #1, and cells #2 and #3 are included in an area #2. In Fig. 5, the terminal 10 camps on the cell #0 and receives SIBx specific to the area #1 from the base station 20 forming the cell #0. The terminal 10 may configure a TRS resource/occasion based on TRS resource/occasion information included in the SIBx.

Further, the terminal 10 camping on the cell #0 receives a TRS availability indication. The TRS availability indication may be included in any of the SIBx specific to the area #1, paging DCI, PEI DCI, TRS as PEI, and an RRC message. The terminal 10 starts a validity timer for the TRS availability indication at timing T1.

For example, in Fig. 5, the terminal 10 reselects the cell #1 belonging to the area #1 that is the same as the cell #0 at timing T2. Since the SIBx received in the cell #0 is specific to the area #1 and the cell #1 reselected belongs to the area #1 that is the same as the cell #0, the terminal 10 continues running of the TRS-related operation at timing T2 without stopping the validity timer. Further, since the terminal 10 receives the SIBx specific to the area #1 in the cell #0, the terminal 10 may not receive the SIBx again at the time of reselection of the cell #1.

Further, in Fig. 5, the terminal 10 reselects the cell #2 belonging to the area #2 different from the cell #1 at timing T3. Since the cell #2 thus reselected belongs to the area #2 different from the area #1 to which the cell #1 belongs, the terminal 10 stops the validity timer at timing T3 without waiting for expiration at timing T4. Note that the stop of the validity timer may be rephrased as reset, discard, or the like.

At the time of reselection of the cell #2, respective area IDs to which the cells #1 and #2 belong are different from each other, and therefore, the terminal 10 receives SIBx from the base station 20 forming the cell #2. Note that, in Fig. 5, SIBx is specific to the area #2 but is not limited to this. The terminal 10 may configure a TRS resource/occasion based on TRS resource/occasion information included in the SIBx. The terminal 10 camping on the cell #2 may receive a TRS availability indication and start a validity timer for the TRS availability indication at timing T3. The validity timer expires at timing T5, and the validity time of the TRS availability indication received in the cell #2 is ended.

In a case where SIBx including TRS resource/occasion information is area-specific as such, when the terminal 10 performs cell reselection between the cells #0 and #1 belonging to the same area #1, the terminal 10 continues the validity timer without resetting the validity timer. In the meantime, when the terminal 10 performs cell reselection between the cells #1 and #2 belonging to the areas #1 and #2 different from each other, the terminal 10 resets the validity timer. Accordingly, even in a case where the terminal 10 moves between cells belonging to the same area or between cells belonging to different areas, the validity time of the TRS availability indication can be controlled appropriately.

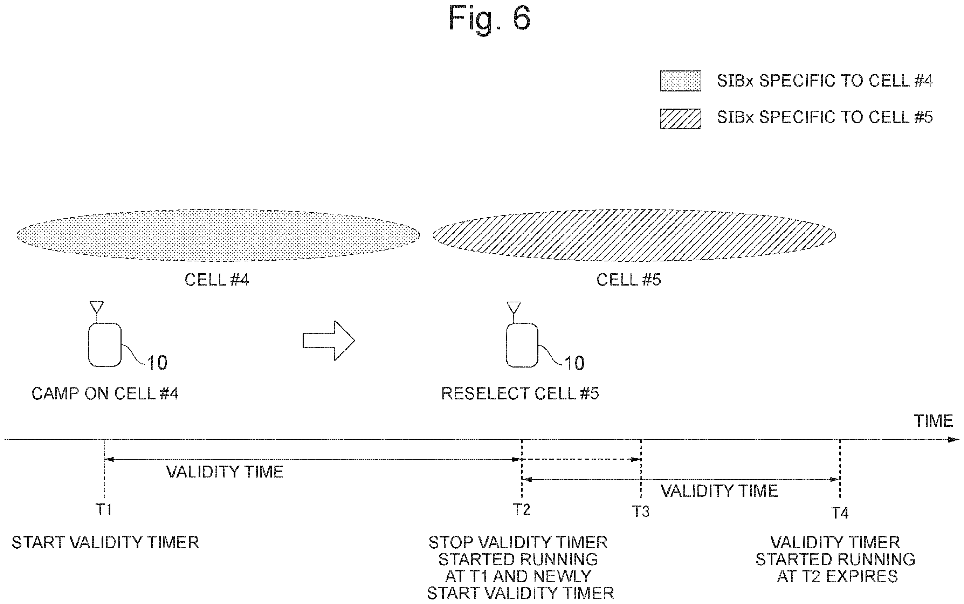

Fig.6 is a diagram illustrating another example of the TRS-related operation at the time of cell reselection according to the present embodiment. For example, in each of cells #4 and #5 in Fig. 6, cell-specific SIBx is broadcast. In Fig. 6, the terminal 10 camps on the cell #4 and receives SIBx specific to the cell #4 from the base station 20 forming the cell #4. The terminal 10 may configure a TRS resource/occasion based on TRS resource/occasion information included in the SIBx.

Further, the terminal 10 camping on the cell #4 receives a TRS availability indication. The TRS availability indication may be included in any of the SIBx specific to the cell #4, paging DCI, PEI DCI, TRS as PEI, or an RRC message. The terminal 10 starts a validity timer for the TRS availability indication at timing T1. For example, in Fig. 6, the validity time is from timing T1 to timing T3.

In Fig. 6, the terminal 10 reselects the cell #5 different from the cell #4 at timing T2. The terminal 10 stops the validity timer at timing T2 without waiting for expiration at timing T3. Further, the terminal 10 receives SIBx specific to the cell #5 and configures a TRS resource/occasion based on TRS resource/occasion information included in the SIBx. The terminal 10 camping on the cell #5 may receive a TRS availability indication and start a validity timer for the TRS availability indication at timing T2. The validity timer expires at timing T4, and the validity time of the TRS availability indication received in the cell #5 is ended.

As described above, the terminal 10 controls a validity timer for a TRS availability indication based on whether SIBx including TRS resource/occasion information is area-specific or not. Accordingly, even in a case where the terminal 10 moves between cells, the validity time of the TRS availability indication can be controlled appropriately.

### (2) TRS-related Operation during Running of Validity Timer

Next will be described an operation of the terminal 10 in a case where transmission of TRS is stopped during running of a validity timer. The terminal 10 may control the validity time of a TRS availability indication by use of a validity timer. For example, after the validity timer starts but before the validity timer expires or stops (that is, while the validity timer is running), the terminal 10 may determine that the TRS availability indication is valid. An operation to stop transmission of TRS is also assumed for a reason that no terminal in the connected state is present in a cell during running of the validity timer, or the like.

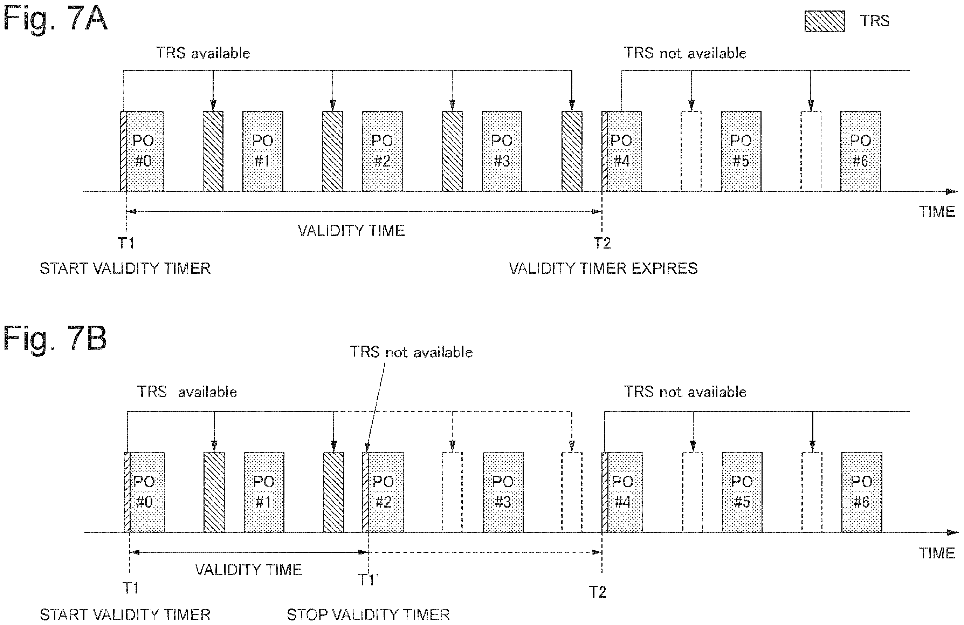

Figs. 7A and 7B are diagrams each illustrating an example of a TRS operation during running of a validity timer according to the present embodiment. In Figs. 7A and 7B, a TRS availability indication is included in paging DCI but is not limited to this, and the TRS availability indication should be signaled to the terminal 10 by use of higher layer signaling of system information, an RRC message, or the like, or physical layer signaling of PEI DCI, a specific signal for PEI, or the like. Further, it is needless to say that the start timing of the validity timer is not limited to those illustrated herein.

Fig. 7A illustrates an example in which a validity timer started at timing T1 expires at timing T2. As illustrated in Fig. 7A, the terminal 10 detects paging DCI including a TRS availability indication (first indication information) indicating that TRS is available in a PDCCH monitoring occasion in a PO #0. The terminal 10 may start the validity timer in response to the detection of the TRS availability indication and take a period until the validity timer expires as the validity time of the TRS availability indication. The terminal 10 determines that TRS is available in TRS resources/occasions in the validity time, based on the TRS availability indication.

Further, the terminal 10 detects paging DCI indicating that TRS is not available in a PDCCH monitoring occasion in a PO #4 after expiration of the validity timer. The terminal 10 determines that TRS is not available in TRS resources/occasions, based on the paging DCI.

Fig. 7B illustrates an example in which the validity timer started at timing T1 stops at timing T1'. As illustrated in Fig. 7B, the terminal 10 receives a TRS availability indication (second indication information) indicating that TRS is not available at timing T1' during running of the validity timer, and this is a difference from Fig. 7A. In terms of Fig. 7B, the following mainly describes the difference from Fig. 7A.

The terminal 10 detects paging DCI including a TRS availability indication indicating that TRS is not available in a PDCCH monitoring occasion in a PO #2 during running of the validity timer. The terminal 10 stops the validity timer in response to the detection of the TRS availability indication. The terminal 10 determines that TRS is not available in TRS resources/occasions after the timer stops. As such, when the validity timer stops at timing T1', the terminal 10 may determine that the validity time of the TRS availability indication detected in the PO #0 ends without waiting for expiration of the validity timer.

Note that the TRS availability indication indicating that TRS is not available, informed during running of the validity timer, may be a specific value (for example, a value "00" as two bits among six bits) of at least part of bits in a reserved field of paging DCI.

As described above, in a case where the TRS availability indication indicating that TRS is not available is received during running of the validity timer related to the validity time of the TRS availability indication indicating that TRS is available, the terminal 10 may stop the validity timer and assume that TRS is not available in subsequent TRS resources/occasions. Hereby, even in a case where whether or not TRS is transmitted is changed by the operation on the system side, the terminal 10 can operate appropriately.

### (3) TRS-related Operation based on SIBx

Next will be described an operation of the terminal 10 in a case where availability of TRS is indicated by use of SIBx. More specifically, the following describes (3.1) a change operation on an indication about availability of TRS by use of SIBx, and (3.2) a control operation on validity time of the indication about availability of TRS by use of SIBx.

### (3.1) Change Operation of TRS Availability Indication by use of SIBx

As described in Fig. 2, generally, in a case where the content of SIBx is changed, the terminal 10 detects notification information (hereinafter referred to as an "SI change notification") about the change of the SIBx in a given modification period, and in its subsequent modification period, the terminal 10 acquires an SI message including the changed SIBx. The SI change notification is also called "SI change indication," or the like. For example, a short message in paging DCI may be used as the SI change notification. The paging DCI may be monitored in each PO in the given modification period.

The terminal 10 may receive an SI message including SIBx modified in the subsequent modification period based on the SI change notification detected in the previous modification period. The modification period may be constituted by a given number of radio frames, for example. The boundary between the modification periods may be determined based on SFN and the number of radio frames constituting the modification periods, for example.

In the meantime, it is desired that whether or not TRS is actually transmitted in a TRS resource/occasion be changeable for various factors. For example, in a case where traffic in the whole system increases, it is assumed that overhead by TRS is reduced by actually transmitting no TRS in a configured TRS resource/occasion. In the meantime, in a case where traffic in the whole system decreases, it is assumed that an effect to reduce electric power to be consumed by the terminal 10 is enhanced by actually transmitting TRS in a configured TRS resource/occasion.

In a case where whether or not TRS is actually transmitted in a TRS resource/occasion is changed as such, how the terminal 10 is informed of the change becomes a problem. Here, in a case where the terminal 10 determines whether or not TRS is actually transmitted in a TRS resource/occasion based on a TRS availability indication in SIBx, it is assumed that an update procedure of an SI message (hereinafter referred to as an "SI update procedure") is used.

However, in the SI update procedure, it is not assumed that a value of the TRS availability indication in SIBx (or whether or not SIBx includes a TRS availability indication) is changed. Accordingly, in a case where the SI update procedure is just used, it might be difficult to appropriately control the timing when the TRS availability indication becomes valid and/or the validity time of the TRS availability indication.

In view of this, in a case where the TRS availability indication in SIBx changed by the SI update procedure indicates that TRS is actually transmitted in a TRS resource/occasion, the terminal 10 may determine the timing (that is, start timing of the validity timer) when the TRS availability indication becomes valid, based on timing as a reference (hereinafter referred to as "reference timing").

The reference timing may be, for example, timing about reception of SIBx including a TRS availability indication indicating that TRS is available, timing about reception of SIBx other than the SIBx or SIB1, or the boundary between modification periods. The timing about reception may be start or end timing of a received radio frame, slot or symbol or may be start or end timing of a period (for example, an SI window) used for reception, or the like.

Further, the terminal 10 may determine start timing of the validity timer based on the reference timing and an offset to the reference timing. The offset may be defined by the number of slots, the number of radio frames, the number of hyper radio frames, time (for example, ms), an integral multiple of a paging cycle, an integral multiple of a DRX cycle, or the like. The offset may be determined in specifications in advance or may be informed from the base station 20. Further, a value of the offset may be 0, and the terminal 10 may determine the reference timing as the timing at which the TRS availability indication becomes valid.

Further, the terminal 10 may receive information about the offset (hereinafter referred to as "offset information") from the base station 20. The offset information may be included in SIBx including a TRS availability indication, may be included in other SIBx, may be included in SIB1, or may be included in other RRC messages.

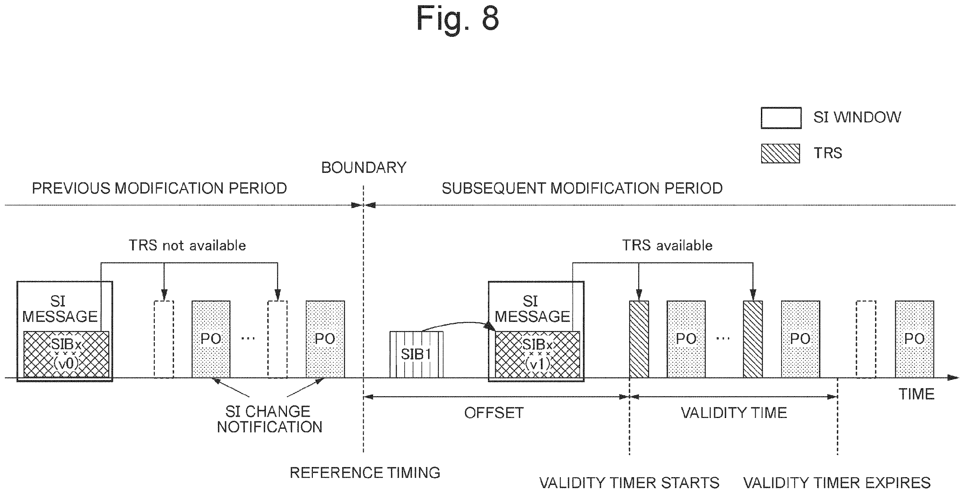

Fig. 8 is a diagram illustrating an example of the SI update procedure according to the present embodiment. For example, in Fig. 8, a TRS availability indication in SIBx indicates that TRS is actually transmitted in a TRS resource/occasion, and in a case where TRS is not actually transmitted, SIBx does not include the TRS availability indication. However, as described above, it is needless to say that a TRS availability indication indicating whether or not TRS is actually transmitted in a TRS resource/occasion may be included in SIBx.

For example, in Fig. 8, SIBx transmitted in a previous modification period does not include a TRS availability indication and indicates that TRS is not actually transmitted in TRS resources/occasions. In the meantime, when a factor for which TRS should be actually transmitted is detected in the previous modification period, the base station 20 transmits an SI change notification of an SI message including SIBx in a PO. When the terminal 10 detects the SI change notification by PDCCH monitoring in the PO, the terminal 10 receives SIB1 in a subsequent modification period, and based on the SIB1, the terminal 10 receives an SI message including changed SIBx. Although not illustrated herein, the terminal 10 may receive MIB before the SIB1 after the boundary.

Further, version information (for example, RRC IE "valueTag") of SIBx in the SIB1 in FIG. 8 indicates v1 obtained by adding 1 to v0. Since the version information (here, v1) of SIBx in the SIB1 is different from version information (here, v0) of SIBx stored in the terminal 10, the terminal 10 may acquire an SI message including SIBx of v1. The terminal 10 determines that TRS is actually transmitted in TRS resources/occasions, based on a TRS availability indication in the SIBx of v1.

Further, in Fig. 8, the terminal 10 may take the boundary between modification periods as reference timing, and based on the reference timing and an offset, the terminal 10 may determine the timing when the TRS availability indication becomes valid. The terminal 10 may start a validity timer at the determined timing. The terminal 10 may determine a period after the validity timer starts but before the validity timer ends, as the validity time of the TRS availability indication. The validity time may be defined by an integral multiple of the modification period.

As illustrated in Fig. 8, when the validity timer expires, the base station 20 stops transmission of TRS in TRS resources/occasions. Further, the base station 20 may stop broadcasting the SIBx of v1. Even when the base station 20 stops transmission of TRS after expiration of the validity timer, the base station 20 may not transmit an SI change notification. That is, the base station 20 does not have to broadcast SIBx of v2 indicating that TRS is not transmitted after expiration of the validity timer. Further, v1 should be maintained without modifying the version information of the SIBx in SIB1.

Note that, in Fig. 8, the boundary between modification periods is taken as the reference timing. However, as described above, the reference timing may be timing about reception of an SI message including SIBx of v1 that includes a TRS availability indication, timing about a SI window where the SI message is transmitted, timing about reception of SIB1, or the like.

As described above, even in a case where the TRS availability indication in SIBx changed by the SI update procedure indicates that TRS is actually transmitted in a TRS resource/occasion, it is possible to appropriately control start timing of a validity timer and/or the validity time of the TRS availability indication.

### (3.2) Control Operation of Validity Time using SIBx

In the meantime, it is assumed such a case that, while the terminal 10 to camp on a given cell starts the validity timer based on SIBx, another terminal 10 starts camping on the given cell. In this case, when the validity timer expires, the base station 20 does not actually transmit TRS in a TRS resource/occasion, and therefore, it is necessary that the terminals 10 belonging to the same cell have the same expiration timing for a validity timer (that is, the same end timing for the validity time of a TRS availability indication in SIBx).

In view of this, when the base station 20 broadcasts information about the validity time of a TRS availability indication (hereinafter referred to as "validity time information"), the base station 20 creates the validity time information based on an elapsed time from the start of the validity timer during running. The validity time information may be included in SIBx including a TRS availability indication or may be included in other SIBs (for example, other SIBx, SIB1, or the like). For example, the validity time information may indicate how long the TRS availability indication is valid. Note that the elapsed time from the start of the validity timer during running may be rephrased as remaining time until the validity timer expires.

The validity time information indicates, for example, remaining time until the expiration timing of the validity timer, and the remaining time may be modified based on the elapsed time from the start timing of the validity time. Alternatively, the validity time information may indicate the time of the expiration timing of the validity timer, a radio frame number, a hyper radio frame number, or the like, for example. That is, the validity time information may indicate the expiration timing of the validity timer absolutely. For example, the validity time information may be defined by use of UTC (Universal Time Coordinated) time and may indicate when a TRS availability indication (for example, contents of the TRS availability indication) expires.

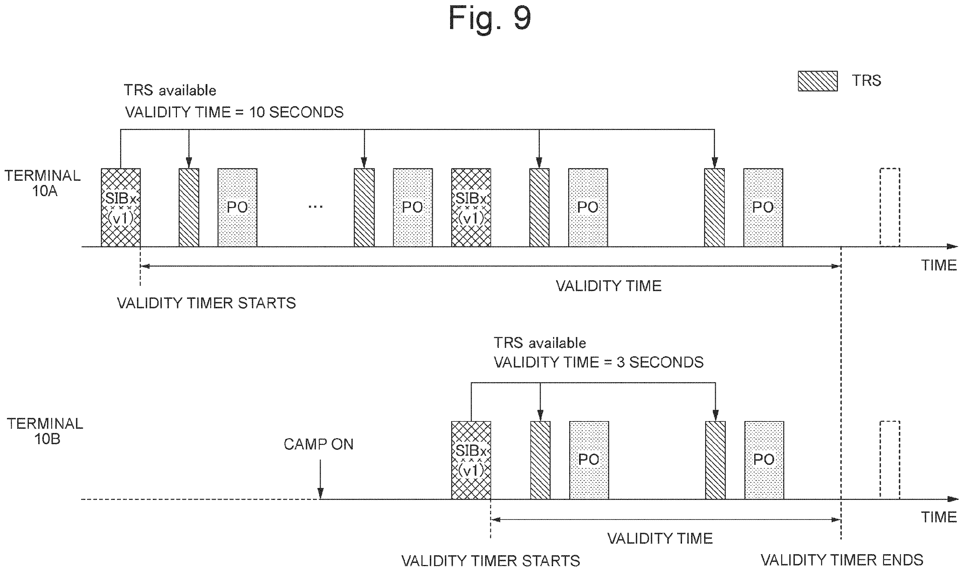

Fig. 9 is a diagram illustrating an example of a control operation on validity time of a TRS availability indication according to the present embodiment. For example, in Fig. 9, a terminal 10A camps on a given cell, and a validity timer indicative of validity time of a TRS availability indication in SIBx is running. Note that, in Fig. 9, start timing of running of the validity timer is the same as end timing of reception of SIBx, but this is just an example, and the start timing of running of the validity timer is not limited to this. As described above, the start timing should be determined based on the reference timing and the offset.

For example, in Fig. 9, the validity time information in SIBx indicates remaining time until the validity timer expires. As illustrated in Fig. 9, in a case where SIBx is broadcast at a given cycle, remaining time indicated by validity time information included in each SIBx may be determined based on elapsed time after the validity timer is started from an initial value. For example, validity time information in SIBx received while the validity timer is not running indicates 10 seconds as the initial value. In the meantime, validity time information in SIBx received during running of the validity timer may indicate 3 seconds as remaining time based on elapsed time from 10 seconds as the initial value.

As such, the value indicated by the validity time information in SIBx may be modified based on elapsed time from the start timing of the validity timer. Hereby, even in a case where a terminal 10B camps on the same cell as the terminal 10A during running of the validity timer in the terminal 10A, it is possible to avoid such a situation that respective validity timers of the terminals 10A and 10B have different expiration timings.

Note that, as illustrated in Fig. 9, remaining time indicated by validity time information in SIBx may be modified every cycle of SIBx. Even when the validity time information in SIBx is modified, the base station 20 may not transmit the SI change notification. In the meantime, in a case where the initial value (10 seconds in Fig. 9) indicated by the validity time information in SIBx is extended, the base station 20 may perform the SI update procedure based on the SI change notification and broadcast SIBx of v2 including validity time information indicative of an extended initial value.

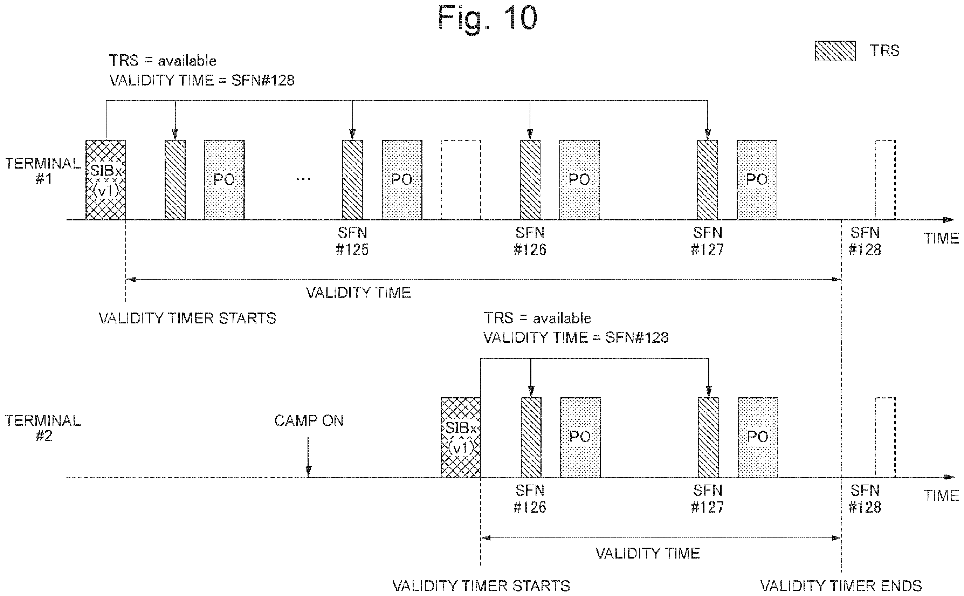

Fig. 10 is a diagram illustrating another example of the control operation on the validity time of the TRS availability indication according to the present embodiment. For example, in Fig. 10, validity time information indicates SFN #128 as expiration timing of the validity time. Note that other operations in Fig. 10 are just what is described in Fig. 9.

Since the validity time information in SIBx indicates an index of time when the validity time expires or a time unit as such, it is not necessary to modify the valid time sequentially based on elapsed time from the start timing of the validity timer. Accordingly, even without performing the modification operation on validity time information in the base station 20 as described in Fig. 9, it is possible to avoid a difference in expiration timing between respective validity timers of the terminals 10.

### (Configuration of Wireless Communication System)

Next will be described the configuration of each equipment in the wireless communication system 1. Note that the following configuration is intended to illustrate a necessary configuration in the description of the present embodiment and does not preclude each equipment having a functional block not illustrated herein.

### <Hardware Configuration>

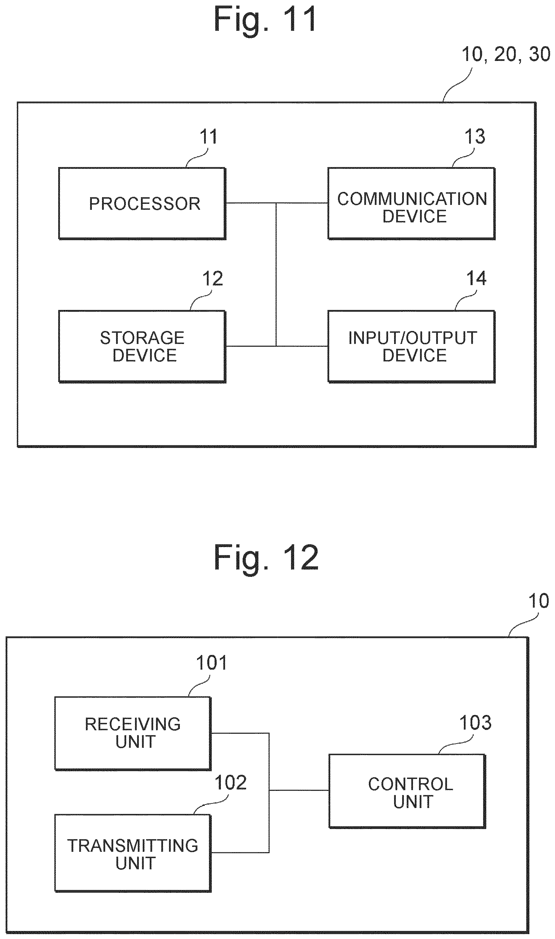

Fig.11 is a diagram illustrating an example of the hardware configuration of each equipment in the wireless communication system according to the present embodiment. Each equipment in the wireless communication system 1 (for example, the terminal 10, the base station 20, the CN 30, or the like) includes a processor 11, a storage device 12, a communication device 13 for performing wired or wireless communication, and an input/output device 14 for accepting various input operations and outputting various information.

The processor 11 is, for example, a CPU (Central Processing Unit) to control each equipment in the wireless communication system 1. The processor 11 may read a program from the storage device 12 and execute the program to perform various processing to be described in the present embodiment. Each equipment in the wireless communication system 1 may also be configured to include one or more processors 11. Further, each equipment concerned may also be called a computer.

The storage device 12 is constituted by, for example, storages such as a memory, an HDD (Hard Disk Drive), and/or an SSD (Solid State Drive). The storage device 12 may also store various information required to perform processing by the processor 11 (for example, programs and the like executed by the processor 11).

The communication device 13 is a device for performing communication through wired and/or wireless networks and may include a network card, a communication module, a chip, an antenna, and the like, for example. Further, an amplifier, an RF (Radio Frequency) device for performing processing on radio signals, and a BB (Base Band) device for performing processing on baseband signals may be included in the communication device 13.

The RF device performs D/A conversion, modulation, frequency conversion, power amplification, and the like on a digital baseband signal received from the BB device, for example, to generate a radio signal to be transmitted from an antenna A. Further, the RF device performs frequency conversion, demodulation, A/D conversion, and the like on a radio signal received from the antenna to generate and transmit a digital baseband signal to the BB device. The BB device performs processing for converting the digital baseband signal to a packet and processing for converting the packet to a digital baseband signal.

The input/output device 14 includes input devices such as a keyboard, a touch panel, a mouse, and/or a microphone, and output devices such as a display and/or a speaker, for example.

Note that the hardware configuration described above is just an example. In each equipment inside the wireless communication system 1, part of the hardware illustrated in Fig. 11 may be omitted, or any other hardware unillustrated in Fig. 11 may be included. Further, the hardware illustrated in Fig. 11 may be constituted by one or more chips.

### <Functional Block Configuration>

### <<Terminal>>

Fig. 12 is a diagram illustrating an example of the functional block configuration of the terminal according to the present embodiment. As illustrated in Fig. 12, the terminal 10 includes a receiving unit 101, a transmitting unit 102, and a control unit 103.

All or some of the functions implemented by the receiving unit 101 and the transmitting unit 102 can be achieved by use of the communication device 13. Further, all or some of the functions implemented by the receiving unit 101 and the transmitting unit 102, and the control unit 103 can be achieved by the processor 11 executing a program stored in the storage device 12. Further, the program can be stored in a storage medium. The storage medium with the program stored thereon may be a non-transitory computer readable medium. The non-transitory medium is not limited particularly but may be a storage medium such as a USB memory or a CD-ROM.

The receiving unit 101 receives downlink signals. Further, the receiving unit 101 may also receive information and/or data transmitted through each downlink signal. Here, for example, the verb "receive" may also include the meaning of performing processing related to reception including at least one of the reception, demapping, demodulation, decoding, monitoring, and measurement of a radio signal. The downlink signal may include, for example, at least one of the PDSCH, the PDCCH, a downlink reference signal, the synchronization signal, the PBCH, and so on.

The receiving unit 101 monitors PDCCH candidates in a search space and detects DCI. The receiving unit 101 may receive downlink user data and/or control information (for example, Medium Access Control Element (MAC CE), an RRC message, an NAS message, or the like) on a higher layer through PDSCH scheduled by the DCI.

More specifically, the receiving unit 101 receives SIBx (system information). Further, the receiving unit 101 may receive indication information indicating that TRS is available in a TRS resource/period (resource and/or period) (for example, see (1), (2) described above). The indication information may be included in SIBx, paging DCI, or PEI DCI.

Further, the receiving unit 101 may receive indication information (the second indication information) indicating that TRS is available in a TRS resource/occasion during running of the validity timer (for example, see (2) described above). The indication information may be included in paging DCI or may be a specific value of at least part of bits in a reserved field of the paging DCI.

Further, the receiving unit 101 may receive SIBx including indication information indicating that TRS is available in a TRS resource/occasion (for example, see (3) described above). The receiving unit 101 may receive the SIBx in a subsequent modification period based on an SI change notification (a system information change notification) detected in a previous modification period (for example, see Fig. 8). Further, the receiving unit 101 may receive offset information to the reference timing.

Further, the receiving unit 101 may receive validity time information about validity time of indication information indicating that TRS is available in a TRS resource/occasion. The validity time information indicates remaining time until expiration timing of the validity timer, and the remaining time may be modified based on elapsed time from the start timing of the validity time (for example, Fig. 9). Alternatively, the validity time information may indicate the time of expiration timing, a radio frame number, a hyper radio frame number, or the like (for example, Fig. 10).

The transmitting unit 102 transmits uplink signals. Further, the transmitting unit 102 may also transmit information and/or data to be transmitted through each uplink signal. Here, for example, the verb "transmit" may also include the meaning of performing processing related to transmission including at least one of encoding, modulation, mapping, and transmission of a radio signal. The uplink signals may include, for example, at least one of an uplink shared channel (for example, a Physical Uplink Shared channel: PUSCH), a random access preamble (for example, a Physical Random Access Channel (PRACH)), an uplink reference signal, and so on.

The transmitting unit 102 may transmit uplink user data and/or control information (for example, MAC CE, an RRC message, and the like) on a higher layer through PUSCH scheduled by use of the DCI received by the receiving unit 101.

The control unit 103 performs various controls in the terminal 10.

For example, the control unit 103 may configure a TRS resource/occasion based on SIBx or an RRC message.

Further, in a case where reselection of a cell that the terminal 10 camps on is performed, the control unit 103 may control a validity timer related to validity time of a TRS availability indication based on whether or not SIBx is area-specific (for example, see (1) described above, Figs. 5 and 6). More specifically, in a case where SIBx is area-specific, if cell reselection is performed between cells belonging to the same area during running of the validity timer, the control unit 103 may continue the validity timer. Further, in a case where SIBx is area-specific, if cell reselection is performed between cells belonging to different areas during running of the validity timer, the control unit 103 may stop the validity timer. Further, in a case where SIBx is not area-specific, if cell reselection is performed between cells during running of the validity timer, the control unit 103 may stop the validity timer.

Further, the control unit 103 controls a validity timer related to validity time of a TRS availability indication. More specifically, the control unit 103 starts a timer related to validity time of the first indication information indicating that TRS is available in a TRS resource/occasion (for example, see (2) described above, Fig. 7A). Further, in a case where the receiving unit 101 receives the second indication information indicating that TRS is not available in a TRS resource/occasion during running of the validity timer, the control unit 103 may stop the validity timer (for example, see (2) described above, Fig. 7B).

More specifically, in a case where DCI (for example, paging DCI) subjected to CRC scrambling by specific RNTI is detected in a PDCCH monitoring occasion in a PO, the control unit 103 may stop the validity timer based on the second indication information in the DCI (for example, see Fig. 7B). Further, the control unit 103 may determine that TRS is not transmitted in TRS resources/occasions after given timing after the stop of the validity timer (for example, see Fig. 7B).

Further, the control unit 103 may determine start timing of the validity timer with timing about reception of SIBx, timing about reception of system information other than the system information, or the boundary between modification periods being taken as the reference timing (for example, see (3) described above, Fig. 8). The control unit 103 may determine start timing of the validity timer based on the reference timing and an offset indicated by offset information. Further, the control unit 103 may determine expiration timing of the validity timer based on the validity time information.

### «Base Station»

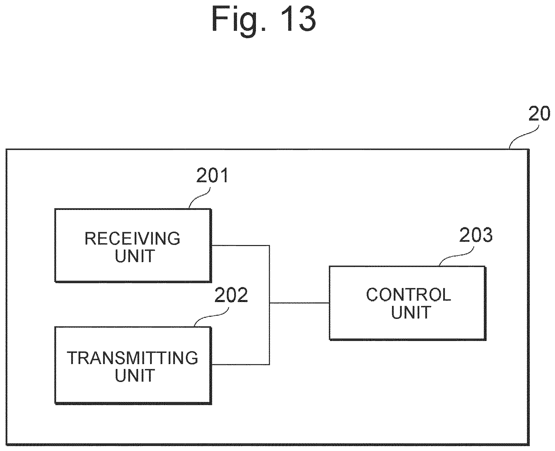

Fig. 13 is a diagram illustrating an example of the functional block configuration of the base station according to the present embodiment. As illustrated in Fig. 13, the base station 20 includes a receiving unit 201, a transmitting unit 202, and a control unit 203.

All or some of the functions implemented by the receiving unit 201 and the transmitting unit 202 can be achieved by use of the communication device 13. Further, all or some of the functions implemented by the receiving unit 201 and the transmitting unit 202, and the control unit 203 can be achieved by the processor 11 executing a program stored in the storage device 12. Further, the program can be stored in a storage medium. The storage medium in which the program is stored may be a non-transitory computer readable medium. The non-transitory medium is not limited particularly but may be a storage medium such as a USB memory or a CD-ROM, for example.

The receiving unit 201 receives the above-mentioned uplink signals. Further, the receiving unit 201 may also receive information and/or data transmitted through each of the above-mentioned uplink signals.

The transmitting unit 202 transmits the above-mentioned downlink signals. Further, the transmitting unit 202 may also transmit information and/or data to be transmitted through each of the above-mentioned downlink signals. More specifically, the transmitting unit 202 transmits SIBx (system information). Further, the transmitting unit 202 may transmit indication information indicating that TRS is available in a TRS resource/period (resource and/or period).

Further, the transmitting unit 202 may transmit indication information (the second indication information) indicating that TRS is available in a TRS resource/occasion during running of the validity timer (for example, see (2) described above).

Further, the transmitting unit 202 may transmit SIBx including indication information indicating that TRS is available in a TRS resource/occasion (for example, see (3) described above). The transmitting unit 202 may transmit the SIBx in a subsequent modification period based on an SI change notification (a system information change notification) detected in a previous modification period (for example, see Fig. 8). Further, the transmitting unit 202 may transmit offset information for the reference timing. Further, the transmitting unit 202 may transmit validity time information about validity time.

The control unit 203 performs various controls in the base station 20. For example, the control unit 203 may control whether or not TRS is transmitted in a TRS resource/occasion, based on various factors. Note that a transmitting unit in a device on the core network 30 may transmit some information transmitted from the transmitting unit 202 of the base station.

### (Supplement)

Various signals, information, and parameters in the aforementioned embodiment may be signaled in any layer. In other words, the various signals, information, and parameters mentioned above may be also replaced with signals, information, and parameters in any layer such as the upper layer (for example, a Non Access Stratum (NAS) layer, an RRC layer, a MAC layer, or the like) or the lower layer (for example, a physical layer). Further, given information is not limited to be explicitly informed and may also be implicitly informed (for example, by not informing the information or using any other information).

Further, the names of various signals, information, parameters, IE, channels, time units, and frequency units are just illustrative examples in the aforementioned embodiment, and the names may be replaced with other names. For example, each slot may be any other name as long as it is a time unit having a given number of symbols. Further, RB may be any other name as long as it is a frequency unit having a given number of subcarriers. Further, "first ..." or "second ..." is just to discriminate a plurality of pieces of information or signals from each other, and the order of the plurality of pieces of information or signals may be replaced appropriately.

Further, the applications of the terminal 10 in the aforementioned embodiment (for example, for RedCap, IoT, and the like) are not limited to those described herein, and the terminal 10 may also be used for any other purpose (for example, for eMBB, URLLC, Device-to-Device (D2D), Vehicle-to-Everything(V2X), or the like) as long as it has similar functions. Further, the format of various information is not limited to that in the aforementioned embodiment, and it may be changed accordingly such as to bit representation (0 or 1), Boolean (true or false), integer values, or characters. Further, the singular and the plural in the aforementioned embodiment may be mutually changed.

The embodiment described above is to facilitate the understanding of this disclosure, and it is not intended to limit the interpretation of this disclosure. The flowchart or the sequence described in the embodiment, and the alignment and arrangement of respective elements, indexes, conditions, and the like included in the embodiment are not limited to those described and can be changed accordingly. Further, at least some of components described in the aforementioned embodiment can be partially replaced or combined.

As described above, a terminal in the present embodiment may include: a receiving unit which receives first indication information indicating that a tracking reference signal is available in a resource and/or a period configured for the tracking reference signal; and a control unit which starts a timer related to validity time for the first indication information. In a case where the receiving unit receives second indication information indicating that the tracking reference signal is not available in the resource and/or the period, during running of the timer, the control unit may stop the timer.

Further, in the above terminal, in a case where downlink control information subjected to Cyclic Redundancy Check (CRC) scrambling by a specific radio network temporary identifier (RNTI) is detected in a downlink control channel monitoring occasion in a paging occasion, the control unit may stop the timer based on the second indication information in the downlink control information.

Further, in the above terminal, the second indication information may be a specific value of at least part of bits of a reserved field in the downlink control information.

Further, in the above terminal, the control unit may determine that the tracking reference signal is not transmitted in resources and/or periods at given timing or later after the timer stops.

Further, in the above terminal, the terminal may be in an idle state or an inactive state.

Further, a wireless communication method for a terminal in the present embodiment may include: a step of receiving first indication information indicating that a tracking reference signal is available in a resource and/or a period configured for the tracking reference signal; a step of starting a timer related to validity time for the first indication information; and a step of stopping the timer in a case where second indication information indicating that the tracking reference signal is not available in the resource and/or the period is received, during running of the timer.

### Reference Signs List

1 ... wireless communication system, 20 ... base station, 30 ... core network, 101 ... receiving unit, 102 ... transmitting unit, 103 ... control unit, 201 ... receiving unit, 202 ... transmitting unit, 203 ... control unit, 11 ... processor, 12 ... storage device, 13 ... communication device, 14 ... input/output device

## Claims

1. A terminal comprising:
a receiving unit which receives information about resources for a plurality of tracking reference signals (TRS) and information indicative of a correspondence of each of the resources for the plurality of TRS to a value of a TRS availability indication field and receives downlink control information including the value of the TRS availability indication field through a physical downlink control channel; and
a control unit which identifies the each of the resources for the plurality of TRS based on the value of the TRS availability indication field.

2. The terminal according to claim 1, wherein the receiving unit receives system information including the information about the resources for the plurality of TRS and the information indicative of the correspondence of the each of the resources for the plurality of TRS to the value of the TRS availability indication field.

3. The terminal according to claim 1 or 2, wherein the each of the resources for the plurality of TRS is a non zero power channel state information reference signal (NZP CSI-RS).

4. The terminal according to claim 1 or 2, wherein the downlink control information is downlink control information including a field used for paging early indication (PEI).

5. The terminal according to claim 1 or 2, wherein the downlink control information is downlink control information subjected to Cyclic Redundancy Check (CRC) scrambling by P-RNTI.

6. The terminal according to claim 1 or 2, wherein the terminal is in an idle state or an inactive state.

7. A wireless communication method for a terminal, the wireless communication method comprising:
a step of receiving information about resources for a plurality of tracking reference signals (TRS) and information indicative of a correspondence of each of the resources for the plurality of TRS to a value of a TRS availability indication field;
a step of receiving downlink control information including the value of the TRS availability indication field through a physical downlink control channel; and
a step of identifying the each of the resources for the plurality of TRS based on the value of the TRS availability indication field
